# EUROPEAN PATENT SPECIFICATION

(11) **EP 4 345 627 B1**
(45) Date of publication and mention of the grant of the patent: **29.04.2026**
(21) Application number: 21962167.9
(22) Date of filing: 02.12.2021
(51) Int. Cl.: G06F 11/36, G06F 8/71, G06F 8/65, G06F 11/30, G06F 16/23, G06F 11/3668, G06F 11/3604, G06F 16/22

(54) **METHOD AND APPARATUS FOR DETECTING SOFTWARE SYSTEM, AND ELECTRONIC DEVICE AND STORAGE MEDIUM**
VERFAHREN UND VORRICHTUNG ZUR ERKENNUNG EINES SOFTWARESYSTEMS SOWIE ELEKTRONISCHE VORRICHTUNG UND SPEICHERMEDIUM
PROCÉDÉ ET APPAREIL DE DÉTECTION DE SYSTÈME LOGICIEL, ET DISPOSITIF ÉLECTRONIQUE ET SUPPORT DE STOCKAGE

(30) Priority: 25.10.2021 CN 202111241197
(43) Date of publication of application: 03.04.2024
(73) Proprietor: Rolling Wireless S.À R.L., 2540 Luxembourg (LU)
(72) Inventor: SUN, Wukui, Shenzhen, Guangdong 518055 (CN)
(74) Representative: J A Kemp LLP
(86) International application number: PCT/CN2021/135031
(87) International publication number: WO 2023/070824

(56) References cited:
- WO-A1-2019/061630
- CN-A- 109 325 349
- CN-A- 111 343 267
- CN-A- 112 882 764
- CN-A- 113 378 218
- US-A1- 2005 223 361
- US-B2- 9 032 369

## Description

The present invention claims priority to the Chinese Patent Application No. 202111241197.4, filed to China Patent Office on 25 October 2021 and entitled "Testing Method and Apparatus of Software System, Electronic Device and Storage Medium".

### FIELD

The present invention relates to the technical field of software, and particularly relates to a testing method of a software system, an electronic device and a computer-readable storage medium.

### BACKGROUND

Typically, a software system consists of multiple software modules, with interdependencies and mutual calls among these modules, collectively forming various pieces of software. In a process of modular software design, a module sends/receives information and use a function of another module or modules via calling an application programming interface (API). Based on the calling relationships among the modules, modules may be logically divided into multiple layers. Upper-level modules call services or APIs provided by lower-level modules. In order to track changes of module, it is common practice to assign independent version numbers to each module. When a software module undergoes modifications, its version number is correspondingly upgraded. Developers and testers could know the software changes based on the module version numbers and carry out corresponding development and testing. However, a software system usually consists of a plurality of pieces of software, each piece of software consists of a plurality of software modules, the calling relationships among these software modules are complex. Only changed software modules can be known based on the module version numbers, while it is still unknown whether the changes in one software module will influence the function of another software module. It requires developers to make their own judgments based on the calling relationships among the modules, which can be time-consuming.

Therefore, how to fast test the interference among the software modules included in a software system is a technical problem that need to be solved .

US9032369B2 provides systems and/or methods for determining and/or executing an appropriate subset of tests in response to a code change. In certain example embodiments, hash digests or other unique values for code structures (such as, for example, classes, methods, and/or other structural elements) may be created. Tests associated those associated code structures may be identified. New hash digests or other unique values may be generated for the code structures after the source code has been modified. In response to a mismatch as between the existing and new hash digests or other unique values, a list of associated tests for possible subsequent execution may be retrieved. Certain example embodiments additionally or alternatively provide an incremental but consistent way of analyzing performance issues, e.g., in connection with a profiler.

US2005223361A1 provides non-redundant software testing based on changes in the execution paths of a software program. Upon changes to the code of the software program, changed or new execution paths are identified. Test cases capable of traversing the changed or new execution paths are then identified and executed to test the modified code. The difference between a first plurality of execution paths of the software program before the changes to the code and a second plurality of the execution paths of the software program after the changes to the code is identified. Test cases that intersect the changed paths may be identified and new test cases may be developed that would execute the changed paths.

### SUMMARY

In view of this, the present invention aims to provide a testing method of a software system, a testing apparatus of a software system, an electronic device and a computer-readable storage medium.

The present invention provides a testing method of a software system, including:
updating, when a part of software modules of the software system are changed, Hash values of the changed software modules;
calculating chain Hash values of unchanged software modules according to a calling relationship corresponding to each software module; and
judging whether the chain Hash values of the unchanged software modules are the same as corresponding historical chain Hash values, and if a chain Hash value of any of the unchanged software modules is different from a corresponding historical chain Hash value, determining the unchanged software module to be interfered.

In one implementation, changes of the part of software modules of the software system include:
determining, when it is detected that a header file and/or a source file of any software module are/is edited, the software module to be changed.

In one implementation, the updating Hash values of the changed software modules includes:
splicing the header files and the source files of the changed software modules to obtain intermediate data; and
performing Hash calculation on the intermediate data to obtain the Hash values.

In one implementation, the calculating chain Hash values of unchanged software modules according to a calling relationship corresponding to each software module includes:
obtaining a target chain Hash value of a target software module called by the unchanged software modules according to the calling relationship; and
calculating, using the Hash values of the unchanged software modules and the target chain Hash value, the chain Hash values of the unchanged software modules.

In one implementation, the calculating, using the Hash values of the unchanged software modules and the target chain Hash value, the chain Hash values of the unchanged software modules includes:
performing AND operation using the Hash values of the unchanged software modules and the target chain Hash value to obtain the chain Hash values of the unchanged software modules.

In one implementation, the testing method of the software system further includes:
obtaining calling relationship information; and
extracting target calling relationship information from the calling relationship information based on the identity information of each software, which is designated as the calling relationship corresponding to the software module.

In one implementation, after judging whether the chain Hash values of the unchanged software modules are the same as corresponding historical chain Hash values, the testing method further includes:
updating historical chain Hash values of the unchanged software modules by the chain Hash values obtained through calculation.

The present invention further provides an electronic device, including a memory and a processor, where:
the memory is configured to store a computer program; and
the processor is configured to execute the computer program to implement the testing method of the software system described above.

The present invention further provides a computer-readable storage medium, configured to store a computer program. The computer program, when executed by a processor, implements the testing method of the software system described above.

Details of one or more embodiments of the present invention are presented in the accompanying drawings and description below. Other features, objectives, and advantages of the present invention will become apparent from the specification, drawings, and claims.

### BRIEF DESCRIPTION OF THE DRAWINGS

In order to describe the technical solutions in the embodiments of the present invention or in the related art more clearly, a simple introduction on the accompanying drawings which are needed in the description of the embodiments or the related art is given below. Apparently, the accompanying drawings in the description below are merely embodiments of the present invention, and based on which other drawings may be obtained by those of ordinary skill in the art without any creative effort.
Fig. 1 is a flow chart of a testing method of a software system provided by an embodiment of the present invention;
Fig. 2 is a structural diagram of a software system provided by an embodiment of the present invention;
Fig. 3 is a specific structural diagram of a software system provided by an embodiment of the present invention;
Fig. 4 is a schematic structural diagram of a testing apparatus of a software system provided by an embodiment of the present invention; and
Fig. 5 is a schematic structural diagram of an electronic device provided by an embodiment of the present invention.

### DETAILED DESCRIPTION

To make the objectives, technical solutions and advantages of the embodiments of the present invention clearer, a clear and complete description of the technical solutions in the embodiments of the present invention will be given below, in combination with the accompanying drawings in the embodiments of the present invention. Apparently, the described embodiments are a part, but not all, of the embodiments of the present invention. All other embodiments, obtained by those of ordinary skill in the art based on the embodiments of the present invention without any inventive efforts, fall into the protection scope of the present invention as defined by the claims.

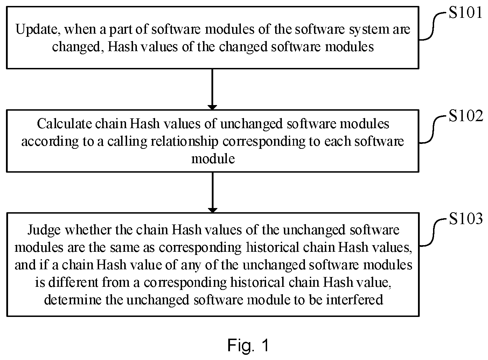

Please refer to Fig. 1. Fig. 1 is a flow chart of a testing method of a software system provided by an embodiment of the present invention. It should be understood that although the steps of the flow chart in Fig. 1 are shown sequentially as indicated by the arrows, the steps are not necessarily performed sequentially as indicated by the arrows. Unless specifically stated otherwise herein, the steps are not performed in a strict order of limitation, and the steps may be performed in other orders. Moreover, at least a part of the steps in the flow chart may include a plurality of sub steps or phases that are not necessarily performed at the same time, but may be performed at different times, and the steps or phases are not necessarily performed in sequence, but rather may be performed in turns or alternation with other steps or at least a part of the steps or phases in the other steps. The method includes:
S101: when a part of software modules of the software system are changed, Hash values of the changed software modules are updated.

The software system refers to a system consisting of a plurality of software modules and capable of building a plurality of pieces of software. A software module refers a collection of software codes that can be directly called. When it is detected that a part of software modules in the software system are changed, the Hash values of the changed software modules are updated. In a general situation, a function of the software module is influenced by both its header file and source file, and any change in either of these two files alters a state of the software module. Therefore, when any change is detected in the header file and/or source file of a software module, it is determined that the software module has been changed. A new Hash value generated during the update needs to represent the state of the entire software module, which usually consists of the header file and source file. Therefore, in one implementation, a process of updating the Hash values may include:
step 11: the header files and the source files of the changed software modules are spliced to obtain intermediate data; and
step 12: Hash calculation is performed on the intermediate data to obtain the Hash values.

This embodiment does not restrict a specific splicing method. For example, the header files and source files may be directly spliced, or they may be split and then mixed and spliced. After obtaining the intermediate data, the Hash values are calculated using it. A specific calculation method is not limited and may refer to the related art.

S102: chain Hash values of unchanged software modules are calculated according to a calling relationship corresponding to each software module.

The calling relationship refers to a relationship of the software module calling another software module. It should be noted that, for any software module, such software module may be called the module, and another software module refers to any software module other than the module.

The calling relationship of any software module illustrates which other software modules have been called by the module, so data for generating the chain Hash value corresponding to the module may be obtained according to the calling relationship. Specifically, the chain Hash value of each unchanged software module needs to be calculated. The chain Hash value can represent whether an unchanged software module is influenced by any changed software module. A specific process of generating the chain Hash values may include the following steps:
step 21: a target chain Hash value of a target software module called by the unchanged software modules is obtained according to the calling relationship; and
step 22: the chain Hash values of the unchanged software modules are calculated using the Hash values of the unchanged software modules and the target chain Hash value.

Because the Hash value is used to represent a status of each software module and the chain Hash value can represent a status of both the software module itself and other software modules called by it, it may be understood that the generation of the chain Hash value of the module requires using the chain Hash values of other software modules. Therefore, it may be determined that, the chain Hash values of the software modules in the software system are not generated at the same time, but are generated layer by layer from a bottom layer of the calling relationship to a top layer according to the calling relationship of the entire software system. Software modules without calling any other software module are located at the bottom layer of the calling relationship, and software modules not called by any other software module are located at the top layer of the calling relationship. Specifically, for an unchanged software module, calculating the chain Hash value corresponding to it requires obtaining the chain Hash value of a target software module called thereby, i.e., the target chain Hash value, and the chain Hash value of the software module is calculated using the Hash value of the software module and the target chain Hash value. This embodiment does not limit a specific calculating method of the chain Hash value. In one implementation, AND operation may be performed using the Hash values of the unchanged software modules and the target chain Hash value to obtain the chain Hash values of the unchanged software modules. In addition, other calculations may be performed, such as other logical operation.

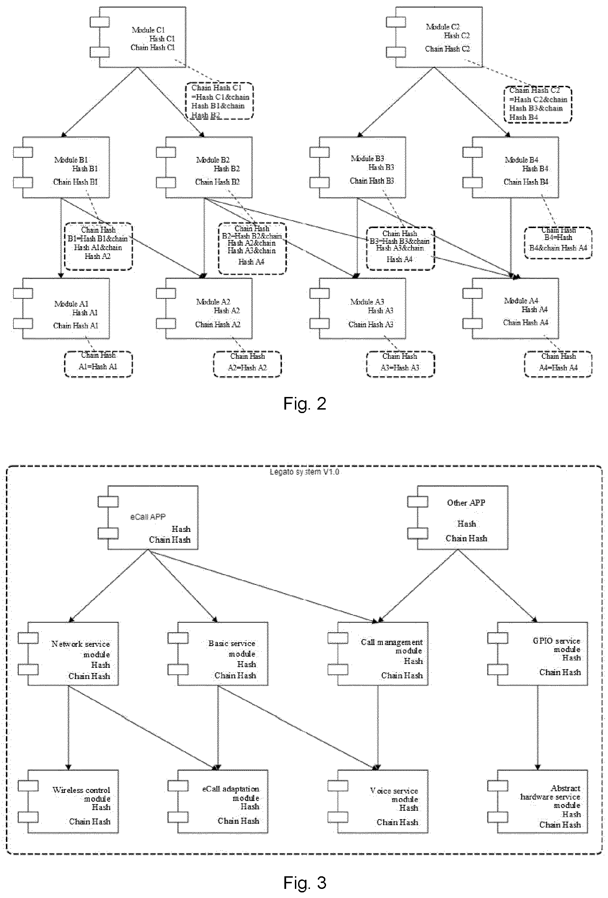

Generating the chain Hash value of an unchanged software module requires using the Hash value thereof and the chain Hash values of all target software modules called thereby. Moreover, when one software module is changed, other software modules calling the software module are equally influenced; and a status of any software module may be reflected using its own chain Hash value, and an influence on any software module may be reflected through its chain Hash value, thus influencing the chain Hash values of other modules. In this way, a range of influence caused by a change of any changed software module may be reflected through the chain Hash values, that is in the chain Hash values of other unchanged software modules. Specifically, please refer to Fig. 2. Fig. 2 is a structural diagram of a software system provided by an embodiment of the present invention.

If a software module does not call another software module, it is located at the bottom layer of the calling relationship, for example, module A1, module A2, module A3 and module A4. The chain Hash values corresponding to these modules are equal to their own Hash values. That is, Hash A1 equals chain Hash A1, Hash A2 equals chain Hash A2, Hash A3 equals chain Hash A3, and Hash A4 equals chain Hash A4. If an unchanged software module calls another software module, the target chain Hash value of the called software module is obtained and is used to generate the chain Hash value. For example, for module B2, which calls module A2, module A3 and module A4, its corresponding target chain Hash value, chain Hash B2, is Hash B2&chain Hash A2&chain Hash A3&chain Hash A4, where & represents AND operation. It should be noted that the above chain Hash value generating mode is an exemplary specific mode, and other chain Hash value generating modes may be selected as needed.

It may be understood that before using the calling relationship to generate the chain Hash value, the calling relationship needs to be generated. Specifically, a calling relationship generation process includes:
step 31: calling relationship information is obtained; and
step 32: target calling relationship information from the calling relationship information based on the identity information of each software is extracted, which is designated as the calling relationship corresponding to the software module.

The calling relationship information includes the calling relationships among the software modules in the software system and the identity information of each software module. Specifically, the calling relationship illustrates a relationship among the identity information of each software module to represent the calling relationships among the software modules. After obtaining the calling relationship information, the calling relationships are filtrated using the identity information of each software module, and a part related to the software module is extracted to generate the calling relationship of the software module. The identity information is the only information for identifying the software module. Exemplarily, it may be a module number, a module name, etc.

S103: it is judged whether the chain Hash values of the unchanged software modules are the same as corresponding historical chain Hash values, and if a chain Hash value of any of the unchanged software modules is different from a corresponding historical chain Hash value, the unchanged software module is determined to be interfered.

The historical chain Hash value refers to the chain Hash value corresponding to each unchanged software module before recording the chain Hash values of the unchanged software modules. Whether the target software module is influenced by the change of the software module may be judged by comparing the chain Hash values and the historical chain Hash value.

If the chain Hash value of the unchanged software module is the same as the historical chain Hash value, the unchanged software module is not interfered and may still run normally. Under such situation, preset operation may be executed. Specific content of the present operation is not limited. For example, it may be no operation, that is not executing any operation. It may be understood that, after judging whether the chain Hash value of the target software module is the same as the corresponding historical chain Hash value, the chain Hash value should be determined as a new historical chain Hash value, so as to provide historical chain Hash values for next judgement.

If at least one unchanged software module has different chain Hash value from the historical chain Hash value, the changed software modules have resulted in influence on the running of the unchanged software modules. In this situation, it cannot be guaranteed that the unchanged software modules can run normally, so it is determined that the unchanged software modules are interfered. Please refer to Fig. 3. Fig. 3 is a specific structural diagram of a software system provided by an embodiment of the present invention. A software system called Legato platform provides a series of modular basic services (i.e., software modules), upon which a user may develop software. An eCall (emergency call) APP used in a user-developed Telematics BOX (TBOX) vehicle-mounted networked terminal needs to undergo certification testing by the operator. An eCall certification process takes several weeks, during which other software in the entire system is also undergoing parallel certification testing. Issues may be discovered during other certification processes that require updating certain software modules in the Legato platform, and Legato needs to update version numbers to reflect these changes, that is requiring recompilation. This has raised questions from an eCall certification agency regarding whether the eCall APP is affected and needs to be retested.

The problem may be solved using the testing method of the software system provided by the present invention. Specifically, if an abstract hardware service module in the Legato platform needs to update its software code due to other issues, the entire software system needs to be recompiled after the update. After compilation is completed, it may be confirmed that chain Hash values of all software modules used by the eCall APP are the same as historical chain hash values, indicating that it has not been affected and does not require restarting the certification testing.

In application of the testing method of the software system provided by the embodiment of the present invention, if it is detected that software modules are changed, the software modules are updated, and a status of these software modules after change may be determined by updating the Hash values of the changed software modules. Each software module has its own calling relationship, and the calling relationship refers to the relationship of the software module calling other software modules, i.e., which other software modules have been called by the module. Based on the calling relationship, the chain Hash values of all unchanged software modules may be recalculated, and the chain Hash value of each software module may represent a status of itself and other software modules called thereby. After calculation, it is judged whether the new chain Hash value is the same as the historical chain Hash value before the update. If they are different, it is determined that the changed software module has caused interference on the unchanged software module. Through the chain Hash value, change and influence of any software module in the software system may be represented, so as to quickly identify the unchanged software modules under interference.

The following is an introduction to a testing apparatus of a software system provided by an embodiment of the present invention. Mutual reference may be made between the testing apparatus of the software system described below and the testing method of the software system described above.

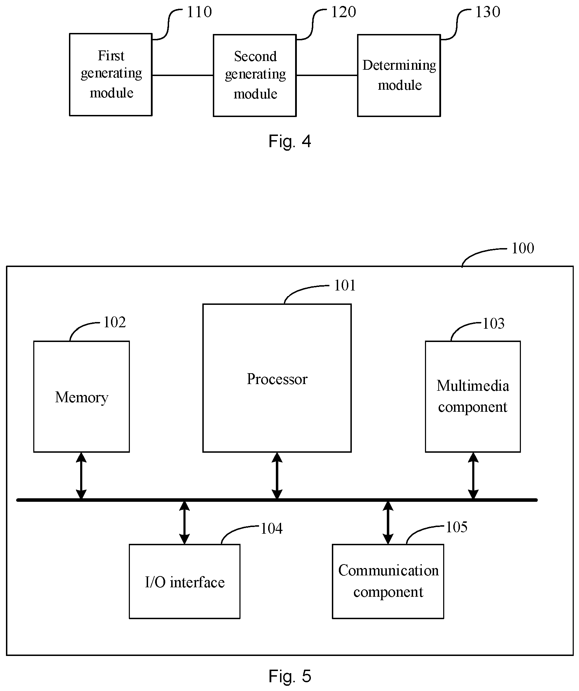

Please refer to Fig. 4. Fig. 4 is a schematic structural diagram of a testing apparatus of a software system provided by an embodiment of the present invention. The testing apparatus includes:
a first generating module 110, configured to update, when a part of software modules of the software system are changed, Hash values of the changed software modules;
a second generating module 120, configured to calculate chain Hash values of unchanged software modules according to a calling relationship corresponding to each software module; and
a determining module 130, configured to judge whether the chain Hash values of the unchanged software modules are the same as corresponding historical chain Hash values, and if a chain Hash value of any of the unchanged software modules is different from a corresponding historical chain Hash value, determine the unchanged software module to be interfered.

In one implementation, the first generating module 110 includes:
an editing testing unit, configured to determine, when detecting editing of a header file and/or a source file of any software module, the software module to be changed.

**In** one implementation, the first generating module 110 includes:
a splicing unit, configured to splice the header files and the source files of the changed software modules to obtain intermediate data; and
a calculating unit, configured to perform Hash calculation on the intermediate data to obtain the Hash value.

Operationally, the second generating module 120 includes:
a target determining unit, configured to obtain a target chain Hash value of a target software module called by the unchanged software modules according to the calling relationship; and
a chain Hash value calculating unit, configured to calculate, using the Hash values of the unchanged software modules and the target chain Hash value, the chain Hash values of the unchanged software modules.

In one implementation, the chain Hash value calculating unit includes:
an AND operation sub-unit, configured to perform AND operation using the Hash values of the unchanged software modules and the target chain Hash value to obtain the chain Hash values of the unchanged software modules.

In one implementation, the testing apparatus of the software system further includes:
an information obtaining module, configured to obtain calling relationship information; and
an identity filtering module, configured to extract, respectively using identity information of each software module, target calling relationship information corresponding to the identity information from the calling relationship information, and use the same as the calling relationship corresponding to the software module.

In one implementation, the testing apparatus of the software system further includes:
a historical value updating module, configured to update historical chain Hash values of the unchanged software modules using the chain Hash values obtained through calculation.

Various modules, units, and subunits in the above-mentioned apparatus may be implemented either entirely or partially through software, hardware, or their combination. These modules, units, and subunits may be embedded in a hardware form within or independent of a processor in an electronic device, or stored in a software form in a memory of the electronic device for the processor to invoke and execute the corresponding operation of these modules.

As used in the present invention, terms such as "component," "module" and "system" are intended to refer to computer-related entities, which may be hardware, combinations of hardware and software, software, or executing software. For example, a component may include but is not limited to a process running on a processor, a processor, an object, an executable code, an executing thread, a program, and/or a computer. As an illustration, applications running on servers and servers themselves may be components. One or more components may reside within a process and/or an executing thread, and the components may be located within a single computer or distributed across two or more computers.

The following is an introduction to an electronic device provided by an embodiment of the present invention. Mutual reference may be made between the electronic device described below and the testing method of the software system described above.

Please refer to Fig. 5. Fig. 5 is a schematic structural diagram of an electronic device provided by an embodiment of the present invention. The electronic device 100 may include a processor 101 and a memory 102, and may further include one or more of a multimedia component 103, an information input/information output (I/O) interface 104 and a communication component 105.

It should be noted that the electronic device specifically may be a module capable of realizing a communication function or a terminal device including the module. The terminal device specifically may be a mobile terminal and/or a smart device, etc. The mobile terminal specifically may be at least one of a mobile phone, a tablet computer and a notebook computer. The smart device specifically may be a smart watch, a smart refrigerator, a smart loudspeaker box, a smart washing machine, a smart television and a smart automobile. The module specifically may be any one of a 2G communication module, a 3G communication module, a 4G communication module, a 5G communication module, and an NB-IOT communication module.

The processor 101 is configured to control overall operation of the electronic device 100 so as to complete all or a part of the steps in the testing method of the software system mentioned above. The memory 102 is configured to store various kinds of data to support the operation of the electronic device 100. These data for example may include instructions for any application program or method operating on the electronic device 100, and data related to the application program. The memory 102 may be implemented by any type of volatile or non-volatile storage device or their combination, such as any one of a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The multimedia component 103 may include a screen and an audio component. The screen, for example, may be a touch panel, and the audio component is configured to output and/or input an audio signal. For example, the audio component may include a microphone, and the microphone is configured to receive external audio signals. The received audio signals may be further stored in the memory 102 or transmitted via the communication component 105. The audio component may include at lease one loudspeaker configured to output audio signals. The I/O interface 104 provides an interface between the processor 101 and other interface modules. The above-mentioned interface modules may be a keyboard, a mouse, buttons, and the like. These buttons may be virtual buttons or tangible buttons. The communication component 105 is configured to facilitate wired or wireless communications between the electronic device 100 and other devices.

The electronic device 100 may be implemented by one or more application specific integrated circuits (ASICs), digital signal processors (DSPs), digital signal processor devices (DSPDs), programmable logic devices (PLDs), field programmable gate arrays (FPGAs), controllers, microcontrollers, microprocessors, or other electronic elements to execute the testing method of the software system provided by the above embodiments.

The following is an introduction to a computer-readable storage medium provided by an embodiment of the present invention. Mutual reference may be made between the computer-readable storage medium described below and the testing method of the software system described above.

The present invention further provides a computer-readable storage medium. A computer program is stored on the computer-readable storage medium. The computer program, when executed by a processor, implements the steps of the above testing method of the software system.

The computer-readable storage medium may include: a USB flash drive, a mobile hard disc, a read-only memory (ROM), a random access memory (RAM), a magnetic tape, a floppy disc or other media capable of storing program codes.

Various embodiments in the description are described in a progressive manner, with each embodiment emphasizing the differences from other embodiments. For identical or similar parts between different embodiments, reference may be made to each other. For the disclosed apparatus in the embodiments, its descriptions are relatively simple due to correspondence to the method disclosed in the embodiments. Please refer to the method section for relevant details.

Those skilled in the art may further realize that units and algorithmic steps of the various examples described herein can be implemented using electronic hardware, computer software, or a combination thereof. In order to illustrate the interchangeability of hardware and software, the composition and steps of each example have been described in a general manner according to functionality. Whether these functions are performed by hardware or software depends on the specific application and design constraints of the technical solution. Different methods may be employed by those skilled in the art to implement the described functions for each specific application, but such implementations should not be considered beyond the scope of the present invention.

The steps of the method or algorithm described by the embodiments disclosed by the present disclosure may be implemented directly by hardware or a software module executed by a processor or a combination thereof. The software module may be placed in a random access memory (RAM), an internal memory, a read-only memory (ROM), a programmable read-only memory (PROM), an electrically erasable programmable read-only memory (EEPROM), a register, a hard disc, a mobile magnetic tape, a CD-ROM, or a storage medium in any other form known to the technical field.

Finally, it should also be noted that, in the present invention, terms such as "first" and "second" are used solely to distinguish one entity or operation from another, without necessarily implying any actual relationship or sequence between these entities or operations. Furthermore, terms such as "including," "comprising", or any other variants are intended to encompass non-exclusive inclusion, thereby allowing a process, method, object, or device that includes a series of elements to not only include those elements explicitly listed but also to include additional elements not explicitly listed or inherent to such process, method, object, or device.

Principles and implementations of the present invention have been elucidated using specific examples herein. The descriptions of the aforementioned embodiments are provided solely to facilitate the understanding of the methods and underlying concepts of the present invention. For those skilled in the art, changes may be made to specific implementations based on the principles disclosed in the present invention within the scope of the claims. Therefore, the content of this specification should not be construed as limiting the scope of the present invention as defined by the claims.

## Claims

1. A testing method of a software system, comprising:
updating (S101), when a part of software modules of the software system are changed, Hash values of the changed software modules;
**characterized in that** the method comprises:
calculating (S102) chain Hash values of unchanged software modules according to a calling relationship corresponding to each software module; and
judging (S103) whether the chain Hash values of the unchanged software modules are the same as corresponding historical chain Hash values, and under the condition that a chain Hash value of any of the unchanged software modules is different from a corresponding historical chain Hash value, determining the unchanged software module to be interfered.

2. The testing method of the software system of claim 1, wherein changes of the part of software modules of the software system comprise:
determining, when it is detected that a header file and/or a source file of any software module are/is edited, the software module to be changed.

3. The testing method of the software system of claim 2, wherein the updating (S101) Hash values of the changed software modules comprises:
splicing the header files and the source files of the changed software modules to obtain intermediate data; and
performing Hash calculation on the intermediate data to obtain the Hash values.

4. The testing method of the software system of claim 1, wherein the calculating (S102) chain Hash values of unchanged software modules according to a calling relationship corresponding to each software module comprises:
obtaining a target chain Hash value of a target software module called by the unchanged software modules according to the calling relationship; and
calculating, using the Hash values of the unchanged software modules and the target chain Hash value, the chain Hash values of the unchanged software modules.

5. The method of the software system of claim 4, wherein the calculating, using the Hash values of the unchanged software modules and the target chain Hash value, the chain Hash values of the unchanged software modules comprises:
performing AND operation using the Hash values of the unchanged software modules and the target chain Hash value to obtain the chain Hash values of the unchanged software modules.

6. The testing method of the software system of claim 1, further comprising:
obtaining calling relationship information; and
extracting target calling relationship information from the calling relationship information based on the identity information of each software, which is designated as the calling relationship corresponding to the software module.

7. The testing method of the software system of claim 1, wherein after judging whether the chain Hash values of the unchanged software modules are the same as corresponding historical chain Hash values, further comprising:
updating historical chain Hash values of the unchanged software modules by the chain Hash values obtained through calculation.

8. An electronic device, comprising a memory (102) and a processor (101), wherein
the memory (102) is configured to store a computer program;
**characterized in that** the processor (101) is configured to execute the computer program to implement the testing method of the software system according to any one of claims 1 to 7.

9. A computer-readable storage medium, configured to store a computer program, **characterized in that** the computer program, when executed by a processor, implements the testing method of the software system according to any one of claims 1 to 7.

## Patentansprüche

1. Verfahren zum Testen eines Softwaresystems, umfassend:
Aktualisieren (S101), wenn ein Teil der Softwaremodule des Softwaresystems geändert wird, von Hash-Werten der geänderten Softwaremodule;
**dadurch gekennzeichnet, dass** das Verfahren umfasst:
Berechnen (S102) von Ketten-Hash-Werten unveränderter Softwaremodule gemäß einer Aufrufbeziehung, die jedem Softwaremodul entspricht; und
Beurteilen (S103), ob die Ketten-Hash-Werte der unveränderten Softwaremodule dieselben sind wie entsprechende historische Ketten-Hash-Werte, und unter der Bedingung, dass sich ein Ketten-Hash-Wert eines beliebigen der unveränderten Softwaremodule von einem entsprechenden historischen Ketten-Hash-Wert unterscheidet, Bestimmen, dass das unveränderte Softwaremodul beeinflusst werden soll.

2. Verfahren zum Testen eines Softwaresystems nach Anspruch 1, wobei Änderungen des Teils von Softwaremodulen des Softwaresystems umfassen:
Bestimmen des zu ändernden Softwaremoduls, wenn erkannt wird, dass eine Header-Datei und/oder eine Quelldatei eines beliebigen Softwaremoduls bearbeitet wurden/wurde.

3. Verfahren zum Testen eines Softwaresystems nach Anspruch 2, wobei das Aktualisieren (S101) der Hash-Werte der geänderten Softwaremodule umfasst:
Zusammenfügen der Header-Dateien und der Quelldateien der geänderten Softwaremodule, um Zwischendaten zu erhalten; und
Durchführen einer Hash-Berechnung an den Zwischendaten, um die Hash-Werte zu erhalten.

4. Verfahren zum Testen eines Softwaresystems nach Anspruch 1, wobei das Berechnen (S102) von Ketten-Hash-Werten unveränderter Softwaremodule gemäß einer Aufrufbeziehung, die jedem Softwaremodul entspricht, umfasst:
Erhalten eines Ziel-Ketten-Hash-Werts eines Ziel-Softwaremoduls, das von den unveränderten Softwaremodulen gemäß der Aufrufbeziehung aufgerufen wird; und
Berechnen der Ketten-Hash-Werte der unveränderten Softwaremodule unter Verwendung der Hash-Werte der unveränderten Softwaremodule und des Ziel-Ketten-Hash-Werts.

5. Verfahren eines Softwaresystems nach Anspruch 4, wobei das Berechnen der Ketten-Hash-Werte der unveränderten Softwaremodule unter Verwendung der Hash-Werte der unveränderten Softwaremodule und des Ziel-Ketten-Hash-Werts umfasst:
Durchführen eines UND-Vorgangs unter Verwendung der Hash-Werte der unveränderten Softwaremodule und des Ziel-Ketten-Hash-Werts, um die Ketten-Hash-Werte der unveränderten Softwaremodule zu erhalten.

6. Verfahren zum Testen eines Softwaresystems nach Anspruch 1, ferner umfassend:
Erhalten von Aufrufbeziehungsinformationen; und
Extrahieren von Zielaufrufbeziehungsinformationen aus den Aufrufbeziehungsinformationen auf Grundlage der Identitätsinformationen jeder Software, die als die dem Softwaremodul entsprechende Aufrufbeziehung bezeichnet wird.

7. Verfahren zum Testen eines Softwaresystems nach Anspruch 1, wobei nach der Beurteilung, ob die Ketten-Hash-Werte der unveränderten Softwaremodule dieselben sind wie entsprechende historische Ketten-Hash-Werte, ferner umfasst:
Aktualisieren historischer Ketten-Hash-Werte der unveränderten Softwaremodule durch die Ketten-Hash-Werte, die durch die Berechnung erhalten wurden.

8. Elektronische Vorrichtung, die einen Speicher (102) und einen Prozessor (101) umfasst, wobei
der Speicher (102) dazu konfiguriert ist, ein Computerprogramm zu speichern;
**dadurch gekennzeichnet, dass** der Prozessor (101) dazu konfiguriert ist, das Computerprogramm auszuführen, um das Verfahren zum Testen des Softwaresystems nach einem der Ansprüche 1 bis 7 zu implementieren.

9. Computerlesbares Speichermedium, das dazu konfiguriert ist, ein Computerprogramm zu speichern, **dadurch gekennzeichnet, dass** das Computerprogramm, wenn es von einem Prozessor ausgeführt wird, das Verfahren zum Testen des Softwaresystems nach einem der Ansprüche 1 bis 7 implementiert.

## Revendications

1. Procédé de test d'un système logiciel, comprenant :
la mise à jour (S101), lorsqu'une partie de modules logiciels du système logiciel est modifiée, de valeurs de hachage des modules logiciels modifiés ;
**caractérisé en ce que** le procédé comprend :
le calcul (S102) de valeurs de hachage en chaîne de modules logiciels non modifiés selon une relation d'appel correspondant à chaque module logiciel ; et
le fait d'estimer (S103) si les valeurs de hachage en chaîne des modules logiciels non modifiés sont identiques à des valeurs de hachage en chaîne historiques correspondantes et à la condition qu'une valeur de hachage en chaîne de l'un quelconque des modules logiciels non modifiés soit différente d'une valeur de hachage en chaîne historique correspondante, la détermination du fait que le module logiciel non modifié doit faire l'objet d'une intervention.

2. Procédé de test du système logiciel selon la revendication 1, dans lequel les modifications de la partie des modules logiciels du système logiciel comprennent :
la détermination, lorsqu'il est détecté qu'un fichier d'en-tête et/ou un fichier source de l'un quelconque des modules logiciels sont révisés, du fait que le module logiciel doit être modifié.

3. Procédé de test du système logiciel selon la revendication 2, dans lequel la mise à jour (S101) de valeurs de hachage des modules logiciels modifiés comprend :
l'assemblage des fichiers d'en-tête et des fichiers sources des modules logiciels modifiés pour obtenir des données intermédiaires ; et
la réalisation d'un calcul de hachage sur les données intermédiaires pour obtenir les valeurs de hachage.

4. Procédé de test du système logiciel selon la revendication 1, dans lequel le calcul (S102) de valeurs de hachage en chaîne des modules logiciels non modifiés selon une relation d'appel correspondant à chaque module logiciel comprend :
l'obtention d'une valeur de hachage en chaîne cible d'un module logiciel cible appelé par les modules logiciels non modifiés selon la relation d'appel ; et
le calcul, à l'aide des valeurs de hachage des modules logiciels non modifiés et de la valeur de hachage en chaîne cible, des valeurs de hachage en chaîne des modules logiciels non modifiés.

5. Procédé de test du système logiciel selon la revendication 4, dans lequel le calcul, à l'aide des valeurs de hachage des modules logiciels non modifiés et de la valeur de hachage en chaîne cible, des valeurs de hachage en chaîne des modules logiciels non modifiés comprend :
la réalisation d'une opération logique ET à l'aide des valeurs de hachage des modules logiciels non modifiés et de la valeur de hachage en chaîne cible pour obtenir des valeurs de hachage en chaîne des modules logiciels non modifiés.

6. Procédé de test du système logiciel selon la revendication 1, comprenant en outre :
l'obtention d'informations de relation d'appel ; et
l'extraction d'informations de relation d'appel cibles à partir des informations de relation d'appel sur la base des informations d'identité de chaque logiciel, qui sont désignées comme la relation d'appel correspondant au module logiciel.

7. Procédé de test du système logiciel selon la revendication 1, dans lequel, après avoir estimé si les valeurs de hachage en chaîne des modules logiciels non modifiés sont identiques aux valeurs de hachage en chaîne historiques correspondantes, le procédé comprend en outre :
la mise à jour de valeurs de hachage en chaîne historiques des modules logiciels non modifiés au moyen des valeurs de hachage en chaîne obtenues par calcul.

8. Dispositif électronique, comprenant une mémoire (102) et un processeur (101), dans lequel
la mémoire (102) est configurée pour stocker un programme informatique ;
**caractérisé en ce que** le processeur (101) est configuré pour exécuter le programme informatique pour mettre en œuvre le procédé de test du système logiciel selon l'une quelconque des revendications 1 à 7.

9. Support de stockage lisible par ordinateur, configuré pour stocker un programme informatique, **caractérisé en ce que** le programme informatique, lorsqu'il est exécuté par un processeur, met en œuvre le procédé de test du système logiciel selon l'une quelconque des revendications 1 à 7.
